(19) Europäisches Patentamt
European Patent Office
Office européen des brevets

(11) EP 1 148 080 A1

(12) **EUROPÄISCHE PATENTANMELDUNG**

(43) Veröffentlichungstag:
**24.10.2001 Patentblatt 2001/43**

(51) Int Cl.[7]: **C08G 77/26**, C08L 83/08, D06M 15/643

(21) Anmeldenummer: **00108509.1**

(22) Anmeldetag: **19.04.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Ciba Spezialitätenchemie Pfersee GmbH
86462 Langweid a.L. (DE)**

(72) Erfinder:
- **Chrobaczek, Harald, Dr.
86153 Augsburg (DE)**
- **Görlitz, Ingo
86152 Augsburg (DE)**
- **Rössler, Erich
86391 Stadtbergen (DE)**
- **Oelschläger, Mark
73434 Aalen (DE)**

(54) **Polyorganosiloxangemische für die Behandlung von Fasermaterialien**

(57) Polyorganosiloxangemische werden beschrieben, die sich erhalten lassen durch Umsetzung von linearen Polysiloxanen, die Si-H-Bindungen enthalten, mit linearen Dihydroxypolysiloxanen und aminofunktionellen Silanen. Die Umsetzung wird so durchgeführt, daß das entstehende Produktgemisch noch Si-H-Bindungen enthält und führt zu vernetzten Strukturen. Die erhaltenen Polysiloxangemische können zur wasserabweisenden Ausrüstung von Fasermaterialien, insbesondere Vliesen, verwendet werden.

EP 1 148 080 A1

## Beschreibung

Die Erfindung betrifft spezielle Polysiloxangemische, ein Verfahren zur Herstellung dieser Gemische sowie ferner die Verwendung solcher Gemische zur Behandlung von Fasermaterialien, insbesondere von Vliesen.

Es ist bekannt, Polyorganosiloxane, die Si-H-Gruppen enthalten, zur Ausrüstung, unter anderem zur hydrophobierenden Ausrüstung von Fasermaterialien einzusetzen. Auch die Behandlung von Vliesen (nonwovens) mit Polysiloxanen ist bekannt. Es ist ferner bekannt, daß Polyorganosiloxane, die Si-H-Gruppen enthalten, mit Wasser reagieren können, wobei die Si-H-Gruppen in Si-OH-Gruppen unter Abspaltung von Wasserstoff überführt werden. Si-H-Gruppen reagieren auch mit anderen Verbindungen, die OH-Gruppen enthalten, beispielsweise auch mit Polyorganosiloxanen mit Si-OH-Gruppen, wobei unter Abspaltung von Wasserstoff neue Si-O-Bindungen, im besonderen Falle Si-O-Si, entstehen. Behandelt man Fasermaterialien mit einem Gemisch von Produkten, die Siloxane mit Si-H-Gruppen und Siloxane mit Si-OH-Gruppen enthalten, so erhält man ohne Zugabe eines Katalysators unbefriedigende wasserabweisende Eigenschaften. Aber auch bei Mitverwendung eines üblichen Vernetzungskatalysators lassen sich mit solchen Gemischen nicht in allen Fällen optimale Ergebnisse erzielen.

Polyorganosiloxane auf Basis von Polyorganowasserstoffsiloxanen, $\alpha,\omega$-Dihydroxypolydiorganosiloxanen, ggf. aminofunktionellen Siliciumverbindungen sowie Katalysatoren sind auch bekannt und beispielsweise in der EP-A 767 217 beschrieben. Gemäß dieser EP-A werden die Polymeren unter Verwendung dreier verschiedener Dihydroxypolysiloxane mit unterschiedlichen Molgewichten hergestellt. Die Mitverwendung von aminofunktionellen Monoalkoxy- oder Dialkoxysilanen wird nicht beschrieben. Die Umsetzung wird in Anwesenheit eines Kondensationskatalysators durchgeführt. Polyorganosiloxane auf Basis von Polyorganowasserstoffsiloxanen, $\alpha,\omega$-Dihydroxypolydiorganosiloxanen und aminofunktionellen Alkoxysilanen sowie deren Verwendung für die Ausrüstung von Fasermaterialien sind ebenfalls bekannt und beispielsweise in der EP-A 702 106 beschrieben. Auch hier wird die Umsetzung in Anwesenheit eines Vernetzungskatalysators durchgeführt. Eine chemische Umsetzung zwischen den genannten Komponenten wird nicht vor der Applikation auf das Fasermaterial durchgeführt. An der Umsetzung, die erst auf dem Fasermaterial stattfindet, sind noch weitere Komponenten beteiligt.

Bekannt sind auch verschäumbare Polyorganosiloxanzusammensetzungen, die sich erhalten lassen durch Mischen von Organosiloxankautschuken, Polyorganowasserstoffsiloxanen, $\alpha,\omega$-Dihydroxypolydiorganosiloxanen und aminofunktionellen Alkoxysilanen und gegebenenfalls weiteren Ausgangsstoffen; dies ist beispielsweise in der EP-A 841 366 beschrieben. Als Ausgangssubstanzen dienen Blockcopolymere, welche R $SiO_{1,5}$-Einheiten enthalten, also Si-Atome, an die 3 Sauerstoffatome gebunden sind.

Die US-Patentschrift 4 177 176 beschreibt Zusammensetzungen für die Behandlung von Fasermaterialien. Die Zusammensetzungen enthalten ein modifiziertes $\alpha,\omega$-Dihydroxypolydimethylsiloxan, das Aminogruppen enthält und das aus unsubstituiertem $\alpha,\omega$-Dihydroxypolydimethylsiloxan, durch Umsetzung mit einem Aminogruppen aufweisenden Alkyldialkoxisilan hergestellt werden kann. Ferner enthalten die Zusammensetzungen ein Siloxan mit Si-H-Bindungen. Das aminofunktionelle Siloxan und das Si-H-Bindungen aufweisende Siloxan liegen hierbei als Gemisch vor; Zusammensetzungen, welche ein Produkt enthalten, das durch chemische Umsetzung zwischen den genannten beiden Siloxanen entsteht, werden in dieser US-Schrift nicht erwähnt.

Die aus dem Stand der Technik bekannten Polysiloxanzusammensetzungen weisen Nachteile auf. Wenn vor der Applikation auf Fasermaterialien keine teilweise chemische Umsetzung zwischen einem Si-H-Bindungen enthaltenden Polysiloxan, einem $\alpha,\omega$-Dihydroxypolydiorganosiloxan und einem aminofunktionellen Dialkoxysilan durchgeführt wird, so sind Höhe und/oder Permanenz der auf den Fasermaterialien erzielbaren Effekte nicht optimal. Dies gilt insbesondere dann, wenn Vliese (nonwovens) mit Polysiloxanzusammensetzungen behandelt werden. Die Verwendung von Zusammensetzungen, die aus dem Stand der Technik bekannt sind, führt hier häufig zu nicht optimalen Vlieseigenschaften, was erzielbare Effekte und Verarbeitbarkeit der Vliese betrifft.

Ebenso ergeben sich Nachteile, wenn Polysiloxanzusammensetzungen verwendet werden, bei deren Herstellung hochmolekulare Polysiloxane verwendet wurden oder Polysiloxane, welche größere Mengen an R $SiO_{1,5}$-Einheiten enthalten und welche höhermolekular sind, in denen also Si-Atome vorliegen, an die drei Sauerstoffatome gebunden sind.

Die Aufgabe der vorliegenden Erfindung bestand darin, verbesserte Polyorganosiloxangemische für die Behandlung von Fasermaterialien, bevorzugt von textilen Flächengebilden, insbesondere von Vliesstoffen, zur Verfügung zu stellen. Die verbesserten Polyorganosiloxangemische sollten stabil, d. h. lagerfähig sein und zwar als solche und in Form wäßriger Dispersionen von geeignetem pH und es ermöglichen, den damit behandelten Fasermaterialien hydrophobe Eigenschaften zu verleihen, wobei die Haftung der Polysiloxangemische auf dem Fasermaterial auch nach Waschvorgängen gut sein sollte.

Die Aufgabe wurde gelöst durch ein Polyorganosiloxangemisch, erhältlich durch Umsetzung eines linearen Polyorganosiloxans A) mit 5 bis 70, vorzugsweise 10 bis 60 Siliciumatomen, das Einheiten der allgemeinen Formel (I)

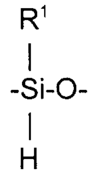

(I)

und gegebenenfalls Einheiten der allgemeinen Formel (II) aufweist,

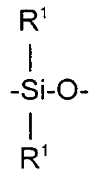

(II)

und dessen Endgruppen durch Reste $(R^1)_3$Si-O- oder durch Reste $H(R^1)_2$Si-O- gebildet werden,
mit einem linearen $\alpha,\omega$-Dihydroxypolydiorganosiloxan B) mit 10 bis 150, vorzugsweise 20 bis 80 Siliciumatomen, das Einheiten der oben genannten allgemeinen Formel (II) und gegebenenfalls zusätzlich Einheiten der Formel (IV) aufweist

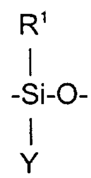

(IV)

und dessen Endgruppen durch Reste HO $Si(R^1)_2$-O- gebildet werden
und mit einem Silan C) der allgemeinen Formel (III),

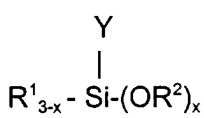

(III)

und gegebenenfalls mit einem linearen Polyorganosiloxan D,
das entweder Einheiten der Formel (I) oder der modifizierten Formel (I), in der das Wasserstoffatom durch OH ersetzt ist, und zusätzlich Einheiten der Formel (IX)

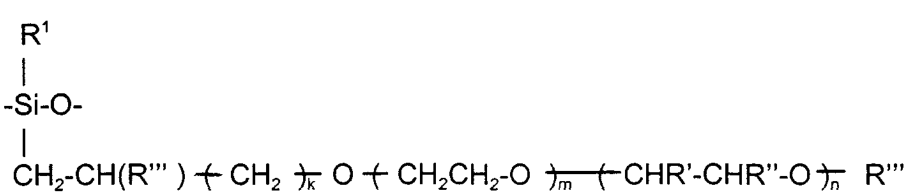

(IX)

und gegebenenfalls Einheiten der Formel (II) enthält, wobei die Endgruppen des Polyorganosiloxans (D) durch Reste $(R^1)_3$ Si-O- oder durch Reste $HO(R^1)_2$Si-O- gebildet werden,
wobei alle Reste $R^1$ unabhängig voneinander für einen Alkylrest mit 1-6 C-Atomen oder einen Phenylrest, vorzugsweise für einen Methylrest stehen, alle Reste $R^2$ unabhängig voneinander für einen Alkylrest mit 1-6 C-Atomen, vorzugsweise für einen Methyl- oder Ethylrest stehen, der Rest Y für einen Rest der Formel V, VI, VII oder VIII

$$-CH_2-CH(R''')-(CH_2)_k\ NH-[(CH_2)_t-NH]_l\ R^5 \qquad (V)$$

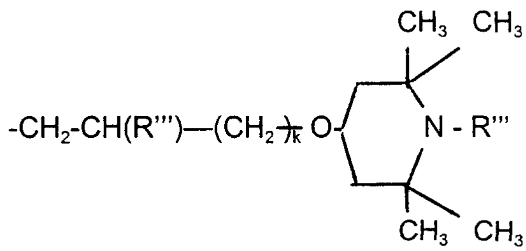

(VI)

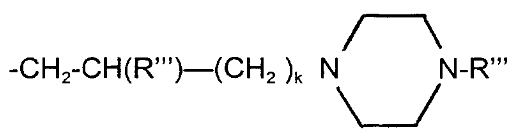

(VII)

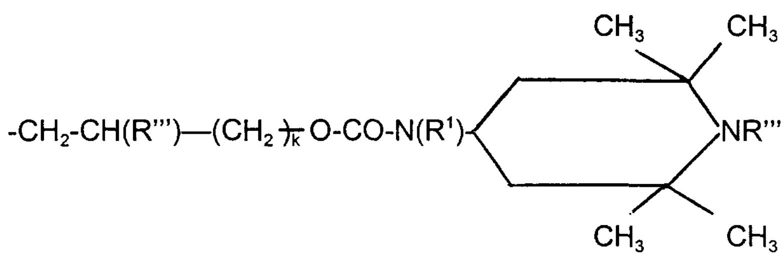

(VIII)

steht,
worin R''' für H oder $CH_3$ steht,
einer der Reste R' und R'' Wasserstoff und der andere $CH_3$ bedeutet,

m eine Zahl von 5 bis 40,
k eine Zahl von 0 bis 6, vorzugsweise 1,
t eine Zahl von 2 bis 8, vorzugsweise 2 bis 4,
und
n eine Zahl von 0 bis 10,
l eine Zahl von 0 bis 3, vorzugsweise 0 oder 1,

bedeutet und
$R^5$ für H, $-CO-CH_3$, $-CO(CH_2)_k\ OH$, $-CH_2(CH_2)_k\ CH_3$ oder den Cyclohexylrest steht, und wobei x eine Zahl von 1 bis 3, vorzugsweise 1 oder 2 ist,
wobei die Umsetzung ohne Polyorganosiloxan, das Einheiten der allgemeinen Formel $R^4SiO_{1,5}$ enthält, in der $R^4$ für einen einwertigen organischen Rest steht, als Ausgangsstoff durchgeführt wird und wobei die Umsetzung so durchgeführt wird, daß die Anzahl der im erhaltenen Polysiloxangemisch vorliegenden Si-H-Einheiten 60 bis 95 % der Anzahl Si-H-Einheiten beträgt, die vor der Umsetzung in Form der Komponenten A) und D) anwesend waren

und wobei die Umsetzung ohne Verwendung eines metallhaltigen Vernetzungs- oder Kondensationskatalysators durchgeführt wird.

Die erfindungsgemäßen Polyorganosiloxangemische lassen sich herstellen durch Umsetzung der drei oben und in Anspruch 1 genannten Ausgangsstoffe A, B und C, wobei gegebenenfalls Ausgangsstoff D mitverwendet werden kann. Diese Umsetzung kann erfolgen, indem man von Anfang an alle drei bzw. vier Ausgangsstoffe miteinander vermischt, gegebenenfalls unter zusätzlicher Verwendung eines organischen Lösungsmittels. Falls ein Lösungsmittel verwendet wird, muß es inert sein, d.h. es darf nicht mit den Ausgangsstoffen, mit den Zwischenstufen und mit den als Endprodukten gebildeten Polysiloxanen chemisch reagieren. Bevorzugt wird ohne organisches Lösungsmittel gearbeitet.
Es ist auch möglich, so zu verfahren, daß nicht von Anfang an alle drei bzw. vier genannten Ausgangsstoffe vorliegen, sondern nur zwei oder drei davon. Es hat sich in vielen Fällen als vorteilhaft erwiesen, wenn bei der Umsetzung die Zugabe einer der Komponenten A) oder C) zum Reaktionsgemisch zeitlich erst nach der Zugabe der Komponente B) erfolgt. In diesem Fall verfährt man so, daß die Umsetzung mit einem Gemisch aus A) und B) sowie ggf. D) oder aus B) und C) sowie ggf. D) gestartet wird und erst später Komponente C) bzw. A) hinzugefügt werden. Es ist auch möglich, die Umsetzung so durchzuführen, daß man von einer oder mehreren der drei Ausgangskomponenten von Anfang an nur einen Teil der vorgesehenen Menge einsetzt und den Rest später hinzufügt.
Für alle genannten Verfahrensvarianten gilt jedoch Folgendes: Alle drei Komponenten A), B) und C) müssen an der chemischen Umsetzung beteiligt sein. Mit anderen Worten: Wenn nach Beendigung der Umsetzung noch die gesamte ursprünglich eingesetzte Menge einer der drei Komponenten in chemisch unveränderter Form vorliegt, so stellt das Reaktionsprodukt der Umsetzung kein erfindungsgemäßes Gemisch dar. Es ist jedoch möglich, daß im Reaktionsgemisch nach der Umsetzung noch Anteile nicht umgesetzter Ausgangsverbindungen vorliegen und ist im Fall der Ausgangskomponente A) sogar erforderlich. Dies kann über die Mengen an verwendeten Ausgangsstoffen gesteuert werden, z.B. durch Verwendung eines Überschusses an einer der Komponenten. Erfindungsgemäße Polyorganosiloxangemische liegen dann vor, wenn nach Beendigung der Umsetzung wesentliche Anteile von jeder der ursprünglich eingesetzten Ausgangskomponenten B) und C) chemisch umgesetzt sind. Unter einem wesentlichen Anteil wird hierbei verstanden, daß mindestens 50 % der ursprünglich eingesetzten Menge der Komponente B) und mindestens 95 % der ursprünglich eingesetzten Menge an Komponente C) chemisch umgesetzt sind. Von der Gesamtzahl der Si-H-Bindungen in A) und D) müssen 5 bis 40 % umgesetzt sein. Falls eine Komponente D), welche Si-H-Bindungen enthält, mitverwendet wird, können mehr als 40 % von Komponente A) umgesetzt werden. Die genannten Werte gelten auch für den bevorzugten Fall, daß bei der Umsetzung zusätzlich Wasser eingesetzt wird. Die Mitverwendung von Wasser ist vielfach von Vorteil und führt zu Produkten, von denen angenommen wird, daß sie, z.T. nach einer vorhergehenden Reaktion von Si-H-Gruppen mit Wasser und/oder nach einer Hydrolyse von Si-$OR^2$-Bindungen durch zugesetztes Wasser gebildet werden. Verwendet man bei der Umsetzung zusätzlich Wasser, so ist es bevorzugt, die Umsetzung so lange weiterzuführen, bis 95 bis 100 % der eingesetzten Wassermenge reagiert haben. Die Zugabe des Wassers zum Reaktionsgemisch kann so erfolgen, daß das Wasser bereits zu Beginn der Umsetzung vorliegt, kann aber auch später erfolgen.
Es ist anzunehmen, daß bei der Umsetzung, die zwischen den Ausgangskomponenten A), B) und C), sowie ggf. D) abläuft, Kondensationsreaktionen stattfinden, bei denen die endständigen OH-Gruppen von Komponente B) mit den $OR^2$-Gruppen von Komponente C) (oder ggf. Hydrolysaten davon) und mit Si-H-Bindungen von Komponente A) und ggf. Komponente D) reagieren bzw. mit Si-OH-Gruppen, die sich durch Umsetzung von Komponente A) oder D) mit Wasser bilden.
Durch die Verwendung von Komponente A), d.h. durch Umsetzung von Si-H-Bindungen bzw. daraus in Gegenwart von Wasser entstandenen Si-OH-Bindungen, mit Komponente B) entstehen vernetzte Strukturen, welche gegebenenfalls noch weiter vernetzt werden können, insbesondere deshalb, weil erfindungsgemäße Polysiloxangemische noch Produkte mit Si-H-Bindungen enthalten. Solche Produkte mit Si-H-Bindungen liegen beispielsweise deshalb im Reaktionsgemisch vor, weil von Anfang an mit einem Überschuß an Komponente A) gearbeitet wurde.

Die erfindungsgemäßen Gemische besitzen sowohl als solche und auch in Form wäßriger Dispersionen im pH-Bereich von 2 - 4 gute Lagerstabilität. Sie eignen sich ausgezeichnet zur Behandlung von Fasermaterialien, bevorzugt von textilen Flächengebilden wie Geweben oder Gewirken und insbesondere von Vliesen (non-wovens). Hierzu werden sie vorzugsweise in Form wäßriger Dispersionen auf die Fasermaterialien aufgebracht, z.B. mittels eines Foulardprozesses. Sie verleihen den so ausgerüsteten Fasermaterialien weichen Griff sowie ein hohes Niveau wasserabweisender Eigenschaften mit guter Permanenz gegenüber Waschprozessen. Ist dagegen ein nicht so hohes Niveau wasserabweisender Eigenschaften gewünscht, sondern sogar ein gewisses Ausmaß an Hydrophilie, so läßt sich dies ebenfalls mit erfindungsgemäßen Gemischen erzielen, wenn bei ihrer Herstellung zusätzlich Komponente D) verwendet wird.

Das als eine der Ausgangsverbindungen dienende Polyorganosiloxan A) ist linear aufgebaut, d.h. es enthält eine lineare Kette von (Si-O) Einheiten. An jedes Si-Atom dieser Kette sind zwei Sauerstoffatome und mindestens ein

Rest $R^1$ gebunden. Der vierte an jedes Si-Atom gebundene Rest kann ein Wasserstoffatom oder ebenfalls ein Rest $R^1$ sein. Mindestens an einen Teil der Si-Atome muß jedoch ein H-Atom gebunden sein, d.h. Komponente A) muß Einheiten der Formel (I) enthalten.

$R^1$<br>
|<br>
-Si-O- (I)<br>
|<br>
H

Daneben kann sie auch Einheiten der Formel (II) enthalten.

$R^1$<br>
|<br>
-Si-O- (II)<br>
|<br>
$R^1$

Vorzugsweise ist an 20 bis 100 %, insbesondere 20 bis 80 %, der Si-Atome von Komponente A ein Wasserstoffatom gebunden. Falls Komponente A) sowohl Einheiten der Formel (I) als auch der Formel (II) enthält, so können diese einzelnen Einheiten beliebig über die Polysiloxankette verteilt sein.
Das als Komponente A) verwendete Siloxan enthält 5 bis 70, vorzugsweise 10 bis 60, Siliciumatome. Die Enden der linearen Polyorganosiloxankette von Komponente A) werden durch Reste der Formel $H(R^1)_2Si$-O- oder durch Reste der Formel $(R^1)_3Si$-O- gebildet. $(R^1)_3Si$-O- ist als Kettenende bevorzugt. Alle Reste $R^1$ bedeuten sowohl bei Komponente A) als auch bei den unten angegebenen Formeln für Komponenten B), C) und D), jeweils unabhängig voneinander einen Alkylrest mit 1 bis 6 Kohlenstoffatomen oder einen Phenylrest. Die Alkylreste können hierbei linear oder verzweigt sein. Bevorzugt stehen in allen Formeln 80 bis 100 % aller anwesenden Reste $R^1$ für $CH_3$. Als Komponente A geeignete Produkte ("Wasserstoffsiloxane") sind auf dem Markt erhältlich, z.B. beziehbar von der Firma Wacker Chemie, Deutschland, oder können nach bekannten Methoden hergestellt werden.

Als Komponente A) können auch Polyorganosiloxane verwendet werden, welche neben Einheiten der Formel (I) auch Einheiten der unten genannten Formel (IX) enthalten, also Seitenketten mit ethoxilierten oder ethoxilierten/propoxilierten Gruppen aufweisen. Solche Polysiloxane sind beschrieben in der deutschen Patentanmeldung mit dem Aktenzeichen 100 12 913.7 (Anmeldetag 16. März 2000).

Diese hier genannten Polysiloxane können nicht nur als Komponente A) bei der Herstellung erfindungsgemäßer Gemische dienen. Sie können auch nachträglich erfindungsgemäßen Gemischen oder erfindungsgemäßen Zusammensetzungen, in Form wäßriger Dispersionen, die unten beschrieben werden, zugesetzt werden. Sie lassen sich z.B. herstellen, indem man Allylalkohol ethoxiliert und ggf. zusätzlich propoxiliert und den erhaltenen alkoxilierten Allylalkohol mit einem Polysiloxan umsetzt, das Si-H-Bindungen aufweist. Damit das erhaltene Produkt als Komponente A) zur Herstellung erfindungsgemäßer Polysiloxangemische dienen kann, muß es Einheiten der Formel (I) aufweisen. Dies bedeutet, daß die genannte Umsetzung des alkoxilierten Allylalkohols mit dem Si-H-Bindungen enthaltenden Polysiloxan unter solchen Bedingungen durchgeführt werden muß, daß das entstehende Produkt noch Einheiten der Formel (I) (Si-H-Bindungen) enthält. Dies läßt sich über die verwendeten Mengenverhältnisse steuern.

Das zweite, zur Herstellung erfindungsgemäßer Polyorganosiloxangemische erforderliche, Ausgangsprodukt (Komponente B) ist ebenfalls ein lineares Polysiloxan, nämlich ein $\alpha,\omega$-Dihydroxypolydiorganosiloxan. Es enthält im Gegensatz zu Komponente A) keine Si-H-Bindungen, sondern in Komponente B) sind an jedes Si-Atom zwei Sauerstoffatome und zwei Kohlenstoffatome gebunden. Komponente B) enthält 10 bis 150, vorzugsweise 20 bis 80, Siliciumatome. Die beiden Kettenenden von B) werden durch Reste der Formel HO-$Si(R^1)_2$-O-gebildet. Die Polysiloxankette

von Komponente B) muß Diorganosiloxy-Einheiten der Formel (II) enthalten.

$$-\overset{R^1}{\underset{R^1}{\overset{|}{\underset{|}{Si}}}}-O- \qquad (II)$$

Daneben kann sie noch Einheiten der Formel (IV) enthalten.

$$-\overset{R^1}{\underset{Y}{\overset{|}{\underset{|}{Si}}}}-O- \qquad (IV)$$

Hierbei besitzt $R^1$ die oben genannte Bedeutung und Y steht für einen Rest der Formel (V), (VI), (VII), (VIII).

$$-CH_2-CH(R''')-(CH_2)_k-NH-[(CH_2)_t-NH]_l-R^5 \qquad (V)$$

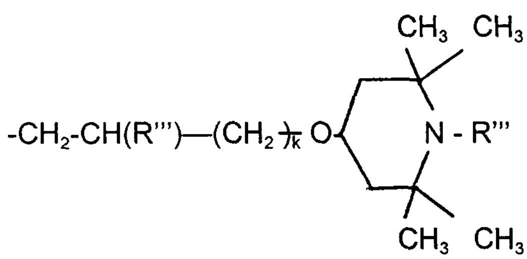

(VI)

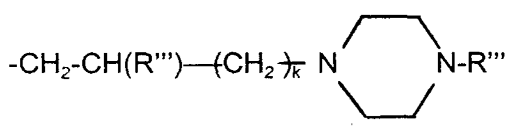

(VII)

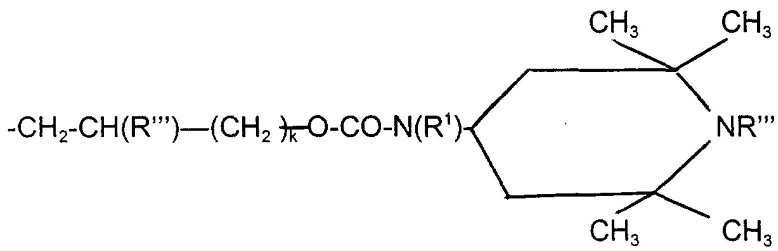 (VIII)

In diesen Formeln steht R''' für Wasserstoff oder eine Methylgruppe, k bedeutet eine Zahl von 0 bis 6, vorzugsweise die Zahl 1, t bedeutet eine Zahl von 2 bis 8, vorzugsweise 2 bis 4, und l bedeutet eine Zahl von 0 bis 3, vorzugsweise 0 oder 1. $R^5$ steht für H oder $-COCH_3$, $-CO(CH_2)_kOH$, $-CH_2(CH_2)_kCH_3$ oder für den Cyclohexylrest. Besonders bevorzugt steht der Rest Y für einen Rest der Formel (V), insbesondere für einen Rest der Formel (V), der eine primäre Aminogruppe ($R^5$=H) und gegebenenfals zusätzlich eine sekundäre Aminogruppe (l=0 oder 1) enthält.
Es ist bevorzugt, wenn 60 bis 100 % der in der Polysiloxankette von Komponente B) vorliegenden Einheiten der Formel (II) und 0 bis 40 % der Formel (IV) entsprechen. Durch die Einführung von Aminogruppen (Formel IV) läßt sich mittels erfindungsgemäßer Gemische den Fasermaterialien ein besonders weicher Griff verleihen.
Als Komponente B) geeignete lineare $\alpha,\omega$-Dihydroxypolydiorganosiloxane sind auf dem Markt erhältlich, z.B. beziehbar von der Firma Wacker Chemie, Deutschland, oder können nach bekannten Methoden hergestellt werden.
Der dritte, zur Herstellung erfindungsgemäßer Polyorganosiloxangemische erforderliche, Ausgangsstoff, Komponente C), ist ein Silan der allgemeinen Formel (III)

Y
|
$R^1_{3-x}\,Si(OR^2)_x$ (III)

Hierin besitzen $R^1$ und Y die oben angegebenen Bedeutungen, alle Reste $R^2$ stehen unabhängig voneinander für einen Alkylrest mit 1 bis 6 Kohlenstoffatomen, vorzugsweise für einen Methyl- oder Ethylrest, und x steht für eine Zahl von 1 bis 3, vorzugsweise für 1 oder 2. In Formel (III) steht $R^1$ vorzugsweise für eine Methylgruppe und Y für einen Rest der Formel (V) sowie $R^5$ für H.
Als Komponente C) geeignete Verbindungen sind auf dem Markt erhältlich, z.B. Produkte der "Dynasylan"-Reihe der Firma Brenntag, Deutschland, oder Produkte der Firma Wacker-Chemie, Deutschland.
Die erfindungsgemäßen Polyorganosiloxangemische enthalten Produkte mit vernetzten Strukturen. Zu ihrer Herstellung werden jedoch keine Polysiloxane als Ausgangsstoffe verwendet, die bereits vernetzte Einheiten enthalten, also Einheiten, in denen 3 Sauerstoffatome an das gleiche Si-Atom gebunden sind. Vielmehr sind die Polysiloxane, welche als Komponente A) und Polysiloxane, welche als Komponente B) verwendet werden, rein linear aufgebaut und enthalten keine Einheiten der allgemeinen Formel $R^4$-$SiO_{1,5}$. Das Gleiche gilt für Polysiloxan D), In dieser Formel $R^4$-Si-$O_{1,5}$ steht $R^4$ für einen einwertigen organischen Rest. Dagegen kann Komponente C), die ein monomeres Silan darstellt, ein Si-Atom enthalten, an das 3 Sauerstoffatome gebunden sind, nämlich dann, wenn in Formel (III) x für die Zahl 3 steht. Bevorzugt steht aber x für 1 oder 2, insbesondere für die Zahl 2.
Ein besonderer Vorteil erfindungsgemäßer Polyorganosiloxangemische besteht darin, daß sie ohne Verwendung eines üblichen metallhaltigen Vernetzungs- oder Kondensationskatalysators hergestellt werden. Auch bei der Behandlung von Fasermaterialien mittels wäßriger Dispersionen erfindungsgemäßer Polysiloxangemische ist vielfach kein üblicher Vernetzungs- oder Kondensationskatalysator, insbesondere kein metallhaltiger Katalysator erforderlich, um weitere Vernetzung und Bindung an das Fasermaterial zu bewirken. Nach Applikation auf die Fasermaterialien lassen sich erfindungsgemäße Gemische weiter vernetzen, weil sie noch Si-H-Bindungen enthalten.
Erfindungsgemäße Polysiloxangemische besitzen auf Grund ihrer Lagerstabilität sowohl als solche als auch in Form saurer wäßriger Dispersionen den Vorteil, daß sie dem Textilausrüster als Einkomponentensysteme zur Verfügung gestellt werden können. Der Ausrüster muß nur noch Konzentration und pH der wäßrigen Dispersionen auf die für die Ausrüstung benötigten Werte einstellen.
Ferner besitzen erfindungsgemäße Polysiloxangemische den Vorteil, daß aus ihnen Zusammensetzungen in Form

wäßriger Dispersionen unter ausschließlicher Verwendung nichtionischer Dispergatoren hergestellt werden können. Silikondispersionen aus dem Stand der Technik dagegen sind vielfach kationische Formulierungen wegen der Anwesenheit von Metallsalzen als Katalysatoren. Kationische Formulierungen andererseits weisen teilweise schlechte Verträglichkeiten mit gewissen erwünschten Flottenzusätzen wie Pigmenten auf.

Bei der Herstellung erfindungsgemäßer Polysiloxangemische kann jeweils an Stelle eines einzigen Produkts, das unter die Definition von Komponente A) bzw. B) bzw. C) bzw. D) fällt, auch ein Gemisch solcher Produkte verwendet werden. Insbesondere die Ausgangskomponenten A), B) und D) sind im Normalfall Gemische, wie sie bei der Herstellung der polymeren Komponenten A), B) und D) üblicherweise anfallen.

Erfindungsgemäße Polyorganosiloxangemische als solche oder in Form wäßriger Dispersionen können zusätzliche Bestandteile enthalten. Dies können Produkte sein, welche den Gemischen nach der beschriebenen Umsetzung von A) mit B) und C) zugesetzt werden und als Zusätze bei der Behandlung der Fasermaterialien erwünscht sind. Es kann sich aber auch um Produkte handeln, die bereits vor oder während dieser Umsetzung zugefügt werden. Die zusätzlich vor oder während der Umsetzung hinzugefügten Bestandteile sollten jedoch inert sein, d.h. nicht mit den Ausgangskomponenten A), B) und C) chemisch reagieren. Eine Ausnahme hiervon bildet die Verwendung eines Polysiloxans D), das an der Umsetzung beteiligt sein kann, wie unten näher erläutert wird.

Bevorzugte erfindungsgemäße Gemische besitzen eine Viskosität bei 20°C von weniger als 1000 mPa sec, insbesondere eine Viskosität von höchstens 500 mPas, z.B. von 100 bis 500 mPa sec. Ferner sind bevorzugte Ausführungsformen erfindungsgemäßer Gemische dadurch gekennzeichnet, daß sie bei 20°C nur flüssige Bestandteile enthalten und daß sie vollständig löslich in Methylenchlorid, Petroläther (Fraktion 40 - 80°C) und Toluol sind, natürlich mit Ausnahme des gegebenenfalls enthaltenen Anteils an Wasser.

Es ist wichtig, daß bei der Herstellung erfindungsgemäßer Polyorganosiloxangemische als Komponente A) nur Polyorganosiloxane verwendet werden, welche 5 bis 70, vorzugsweise 10 bis 60 Siliciumatome enthalten, und als Komponente B) nur Polysiloxane mit 10 bis 150, vorzugsweise 20 bis 80 Si-Atomen. Auch die gegebenenfalls zusätzlich verwendete Komponente D) weist vorzugsweise eine relativ kurze Kette auf, nämlich 10 bis 70 Si-Atome. Durch die Verwendung relativ kurzkettiger und unvernetzter Polysiloxane A), B) und D) als Ausgangsmaterialien läßt sich erreichen, daß auch die erfindungsgemäßen Polysiloxangemische, obwohl sie bis zu einem gewissen Grad vernetzt sind, keine sehr hohen Molgewichte aufweisen und deshalb besonders gut geeignet für Behandlung von Vliesen sind.

Bei der Herstellung erfindungsgemäßer Zusammensetzungen kann außer den Ausgangsprodukten A), B) und C) sowie gegebenenfalls Wasser noch zusätzlich ein Polyorganosiloxan D) eingesetzt werden. Diese Komponente D) ist ein lineares Polysiloxan, dessen Endgruppen durch Reste $(R^1)_3Si\text{-}O\text{-}$ oder durch Reste $HO(R^1)_2Si\text{-}O\text{-}$ gebildet werden. Es ist linear, d.h. es enthält Si-Atome nur innerhalb einer linearen Kette. In dieser Kette sind Einheiten der Formel (IX) anwesend.

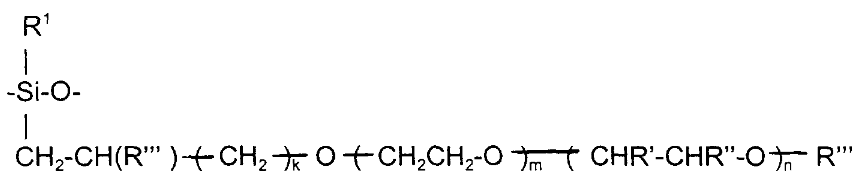

(IX)

Darin besitzen $R^1$, R''' und k die oben bereits genannten Bedeutungen, m ist eine Zahl von 5 bis 40 und n eine Zahl von 0 bis 10. Vorzugsweise ist $m > n$. In jeder Einheit -CHR'-CHR''-O- steht einer der Reste R' und R'' für Wasserstoff, der andere für eine Methylgruppe. Polysiloxane D) lassen sich herstellen durch Umsetzung von Polysiloxanen, welche Si-H-Bindungen enthalten, mit ethoxilierten oder ethoxilierten/propoxilierten Allylalkoholen, unter Einsatz eines Überschusses von Si-H-Bindungen gegenüber C=C-Doppelbindungen.

Polysiloxane D) enthalten außer Einheiten der Formel (IX) noch weitere Einheiten in der Kette. Dies sind entweder Einheiten der oben genannten Formel (I) oder Einheiten, die einer modifizierten Formel (I) entsprechen, wobei die Modifikation darin besteht, daß in Formel (I) nicht ein H-Atom, sondern eine OH-Gruppe an das Siliciumatom gebunden ist. Einheiten der so modifizierten Formel (I) entstehen durch Reaktion von Einheiten der Formel (I) mit Wasser bei pH > 7. Außerdem kann das Polysiloxan D) gegebenenfalls noch Einheiten der Formel (II) enthalten. Gut geeignet als Ausgangskomponente D) sind Polysiloxane, in denen 10 bis 40 % der Gesamtzahl der Si-Atome in Form von Einheiten der Formel (IX), 10 bis 40 % in Form von Einheiten der Formel (I) oder der modifizierten Formel (I) und der Rest in Form von Einheiten der Formel (II) vorliegen.

Durch die Mitverwendung eines Polyorganosiloxans D) bei der Herstellung erfindungsgemäßer Polyorganosiloxangemische ist es möglich, die Hydrophilie-/Hydrophobieeigenschaften der damit behandelten Fasermaterialien gezielt auf den vorgesehenen Einsatzzweck einzustellen.

Im Normalfall werden die Polyorganosiloxane A), $\alpha,\omega$-Dihydroxypolydiorganosiloxane B) und Silane C) sowie gegebenenfalls Polysiloxane D) und Wasser in beliebiger Reihenfolge bei der Umsetzung zugegeben. Es ist aber von Vorteil, wenn die Zugabe einer der Komponenten A) oder C) zum Reaktionsgemisch nach der Zugabe der Komponente B) erfolgt. Insbesondere sollte vermieden werden, daß Komponente B) erst später als die Komponenten A) und C) hinzugefügt wird. Damit wird eine unerwünschte Reaktion ausschließlich zwischen A) und C) verhindert. Es ist sowohl möglich, die gesamte Menge jeder der einzelnen Komponenten auf einmal, als auch in Portionen zuzugeben.

Für die Behandlung von Fasermaterialien gut geeignete erfindungsgemäße Polyorganosiloxangemische erhält man durch die Umsetzung von 20 bis 60 Gewichtsteilen A), 40 bis 75 Gewichtsteilen B) und 0,01 bis 5 Gewichtsteilen C). Für den Fall einer Mitverwendung von Wasser erhält man besonders gut geeignete erfindungsgemäße Polyorganosiloxangemische, wenn bei Umsetzung der oben angeführten Gewichtsteile A), B) und C) 0,01 bis 7 Gewichtsteile, vorzugsweise 0,1 bis 5 Gewichtsteile Wasser hinzugefügt werden.

Falls bei der Herstellung erfindungsgemäßer Polysiloxangemische zusätzlich ein Polyorganosiloxan D), verwendet wird, so setzt man vorzugsweise diese Komponente D) in einer Menge von 10 bis 30 Gewichtsteilen zu, bezogen auf die oben angegebenen Gewichtsteile für die Komponenten A), B) und C).

Die Umsetzung, welche zu erfindungsgemäßen Polyorganosiloxangemischen führt, wird ohne Verwendung eines metallhaltigen Vernetzungs- oder Kondensationskatalysators durchgeführt. Dies ist aus Kosten- und Ökologiegründen ein Vorteil gegenüber bekannten Verfahren, bei denen vernetzte Polysiloxanstrukturen unter Verwendung metallhaltiger Katalysatoren hergestellt werden. Im Normalfall ist auch die weitere Vernetzung der erfindungsgemäßen Produkte nach deren Applikation auf Fasermaterialien ohne Zusatz metallhaltiger Katalysatoren möglich.

Die Umsetzung zur Herstellung erfindungsgemäßer Polysiloxangemische muß so durchgeführt werden, daß die Anzahl der im erhaltenen Gemisch vorliegenden Einheiten mit Si-H-Bindungen 60 bis 95 % der Anzahl der Si-H-Einheiten beträgt, welche vor der Umsetzung in Form der Komponenten A) und D) anwesend waren.

Die erfindungsgemäßen Polyorganosiloxangemische können weiter vernetzt werden, weil sie noch Einheiten der allgemeinen Formel (I) aufweisen. Bevorzugt sind erfindungsgemäße Polyorganosiloxangemische, bei denen die Umsetzung so durchgeführt wurde, daß nach der Umsetzung noch 70 - 90 % der ursprünglich in Form von Komponente A) eingesetzten Si-H-Einheiten vorliegen.

Für die Behandlung von Fasermaterialien gut geeignete erfindungsgemäße Polyorganosiloxangemische erhält man durch Umsetzung bei einer Temperatur von 10 bis 130°C, vorzugsweise von 10 bis 90 °C, besonders bevorzugt von 20 bis 40°C. Die Umsetzungsdauer beträgt vorzugsweise 30 Minuten bis zu einem Tag, insbesondere 30 Minuten bis zu 8 Stunden, wobei Temperatur und Dauer je nach dem gewünschten Umsetzungs- bzw. Vernetzungsgrad gesteuert werden sollten.

Es ist vorteilhaft, die erfindungsgemäßen Polyorganosiloxangemische als wäßrige Dispersionen herzustellen und zu verwenden. Zu diesem Zweck werden die erfindungsgemäßen Polyorganosiloxangemische vorzugsweise unter Einsatz von Dispergatoren mittels bekannter Verfahren in wäßrige Dispersionen überführt. Als Dispergatoren geeignet sind die dem Fachmann für die Dispergierung von Polyorganosiloxanen bekannten, beispielsweise anionische, nichtionische, kationische und amphotere Emulgatoren sowie auch Gemische solcher Emulgatoren. Besonders geeignet sind nichtionogene Dispergatoren wie z.B. ethoxilierte Alkohole mit 8 bis 14 C-Atomen in der Alkylkette. Vor oder während der Dispergierung der erhaltenen Polyorganosiloxangemische in Wasser kann Einstellung des gewünschten pH-Wertes erfolgen. Der pH-Wert der Zusammensetzungen, die nach Dispergierung erfindungsgemäßer Polysiloxangemische in Wasser erhalten werden, wird bevorzugt auf einen Wert zwischen 2 und 4 eingestellt. Zur Einstellung des pH-Werts kann z.B. verdünnte Schwefelsäure verwendet werden. Wäßrige Dispersionen erfindungsgemäßer Polysiloxangemische sind bei pH-Werten von 2 bis 4 stabil, d.h. es findet bei Raumtemperatur keine oder nur äußerst langsame Weiterreaktion der noch vorliegenden Si-H-Bindungen statt.

Nach der Beendigung der zwischen Komponenten A), B) und C) sowie gegebenenfalls D), erfolgten Umsetzung, d.h. sobald Komponente C) im wesentlichen völlig abreagiert hat, können erfindungsgemäße Polyorganosiloxangemische in Abwesenheit von Wasser gelagert werden.

Auch Zusammensetzungen, welche nach Dispergierung in Wasser erhalten werden, sind lagerfähig, wenn eine Einstellung des pH-Wertes auf einen Wert von höchstens 4 erfolgt ist. Im Normalfall sollte der pH-Wert umso niedriger sein, je höher der Restgehalt an Si-H-Bindungen ist.

Die Umsetzung zwischen den Komponenten A), B) und C) wird vorzugsweise unter Inertgas, z.B. unter $N_2$, durchgeführt. Durch den Anteil an Inertgas in der Umgebungsatmosphäre läßt sich das Ausmaß der Bildung vernetzter Einheiten steuern.

Die erfindungsgemäßen Polyorganosiloxangemische eignen sich zur Behandlung von Fasermaterialien, bevorzugt von textilen Flächengebilden, insbesondere von Vliesstoffen. Gut geeignet sind Fasermaterialien aus Polyester, Polyamid, aber auch aus anderen Fasern sowie Mischungen von solchen Fasern.

Die erfindungsgemäßen Polyorganosiloxangemische weisen bereits einen gewissen Grad an Vernetzung auf, wodurch Vorteile bezüglich Lagerstabilität und bezüglich Permanenz der Gemische als solche und der Zusammensetzungen resultieren, welche erfindungsgemäße Gemische in Form wäßriger Dispersionen enthalten. Eine weitere Vernetzung

auf den Fasermaterialien unter Beteiligung der noch anwesenden Si-H-Bindungen kann bei erhöhter Temperatur durchgeführt werden.

Für die Behandlung von Fasermaterialien, insbesondere Vliesen, eignen sich erfindungsgemäße Gemische vor allem in Form wäßriger Dispersionen. Diesen Dispersionen können weitere erwünschte Bestandteile hinzugefügt werden. Die Applikation kann nach bekannten Verfahren erfolgen, z.B. mittels eines Foulardprozesses, wobei die wäßrigen Dispersionen vorher auf die gewünschte Gebrauchskonzentration eingestellt werden.
Mittels erfindungsgemäßer Polysiloxangemische lassen sich den Fasermaterialien wie z.B. den Vliesen (nonwovens) vorteilhafte Eigenschaften verleihen. Hierzu gehören weicher Griff, abgestufte und steuerbare Hydrophobieeigenschaften.

Nach dem Aufbringen von Dispersionen erfindungsgemäßer Polysiloxangemische werden die Fasermaterialien nach üblichen Verfahren getrocknet. Anschließend kann eine weitere Vernetzung noch anwesender Si-H-Bindungen mittels einer Aushärtung bei erhöhter Temperatur durchgeführt werden, z.B. im Bereich von 120 bis 180°C.

Bei der Umsetzung, die zu erfindungsgemäßen Polysiloxangemischen führt, sind einige interessante Modifikationen möglich, durch welche sich Produktgemische mit besonderen Eigenschaften erhalten lasen. Diese Möglichkeiten werden nachfolgend unter den Punkten a) bis d) vorgestellt. Sie und die dabei erhaltenen Produkte fallen jedoch nicht unter die hier vorgelegten Patentansprüche. Für sie wird kein Schutz beansprucht.

a) Es ist möglich, eine gewisse Menge, z.B. 10 bis 40 % der Menge des linearen Dihydroxidiorganopolysiloxans B) durch ein nicht-lineares, d.h. vernetztes Polyorganosiloxan mit $HO(R^1)_2Si-O-$ Endgruppen zu ersetzen.

b) Falls nur ein weicher Griff der behandelten Fasermaterialien angestrebt und auf die Möglichkeit verzichtet wird, auf den Fasermaterialien eine weitere Vernetzung der Polysiloxangemische durchzuführen, so kann mit erheblich niedrigeren Mengen an Polyorganosiloxan A) gearbeitet werden; diese Mengen können so niedrig sein, daß die entstehenden Produktgemische im wesentlichen keine Si-H-Bindungen mehr enthalten. In diesem Fall kann wegen der Abwesenheit von Si-H-Einheiten der pH-Wert wäßriger Dispersionen der Polysiloxangemische auch im alkalischen Bereich liegen.

c) Zusätzlich zu Silan C) können ein oder mehrere weitere Silane eingesetzt werden, z.B. solche, in denen Reste an Silicium gebunden sind, welche perfluorierte Alkylgruppen enthalten. Hierdurch ist es gegebenenfalls möglich, Polysiloxangemische zu erhalten, welche den Fasermaterialien ölabweisende Eigenschaften verleihen. In analoger Weise können zusätzlich zu Polysiloxanen D) Polysiloxane verwendet werden, die durch Addition der Si-H-Gruppe von Polyalkylwasserstoffsiloxanen an ungesättigte Verbindungen entstehen, welche neben C=C-Doppelbindungen noch perfluorierte Reste und gegebenenfalls Phosphoratome enthalten. Durch die Anwesenheit von Phosphoratomen lassen sich gegebenenfalls flammhemmende Wirkungen bei ausgerüsteten textilen Flächengebilden erzielen.

d) Als Polyorganosiloxan A) können auch Produkte eingesetzt werden, welche neben Einheiten der Formel (I) und ggf. der Formel (II) zusätzlich Einheiten enthalten, die durch Umsetzung einer Si-H-Bindung mit einer reaktiven Gruppe eines handelsüblichen UV-Absorbers entstehen. Auf diese Art lassen sich nach Umsetzung mit den Komponenten B) und C) Polyorganosiloxangemische mit UV-absorbierenden Eigenschaften erhalten.

Die Erfindung wird nachfolgend durch Beispiele veranschaulicht.

Beispiel (erfindungsgemäß)

In einem Reaktionsgefäß wurden 230 g eines handelsüblichen $\alpha,\omega$-Dihydroxypolydimethylsiloxans (Komponente B) mit 280 g eines handelsüblichen Polysiloxans, das Si-H-Bindungen aufwies (Komponente A) und mit 2,6 g eines aminofunktionellen Diethoxy-methylsilans (Komponente C) der Formel $Y-Si(CH_3)(OC_2H_5)_2$ umgesetzt. Die Umsetzung verlief bei 30°C während einer Zeit von etwa 5 Stunden.
Hierzu wurden Komponenten A und B vorgelegt, auf 30°C erwärmt und dann Komponente C langsam zugegeben. Es wurde ein Gemisch erhalten, in dem vorvernetzte Polysiloxane enthalten waren.
Komponente A besaß etwa 60 Si-Atome, Komponente B etwa 40 Si-Atome, und der Rest Y in Komponente C entsprach der Formel (V) von Anspruch 1 mit k=1, l=0, $R'''$=H und $R^5$=H. Das erhaltene Produktgemisch enthielt etwa 91 % Si-H-Bindungen, bezogen auf die Anzahl ursprünglich eingesetzter Si-H-Bindungen (bestimmt durch Titration der HBr mittels der Thiosulfatmethode, die HBr entsteht durch Umsetzung der Si-H-Bindungen mit N-Bromsuccinimid)
Das erhaltene Polysiloxangemisch wurde bei Raumtemperatur mit einer wäßrigen Lösung vereinigt, die 410 g Wasser, ca. 30 g eines niedrigmolekularen Diols, ca. 30 g eines ethoxilierten Fettalkohols und 2 g konzentrierte Salzsäure enthielt. Diese wäßrige Lösung wurde unter Rühren zu dem oben beschriebenen Polysiloxangemisch hinzugefügt.

Nach Hochdruckhomogenisierung wurde eine wäßrige, schwach gelbe dünnflüssige Dispersion erhalten, die sich, ggf. nach Verdünnung, besonders zur Behandlung von Faservliesen eignet. Die Dispersion enthielt ca. 41 % Wasser und 52 % Siloxangemisch.

Vergleichsbeispiel 1

Durch Vereinigen zweier getrennt hergestellter wäßriger Dispersionen wurde eine wäßrige Dispersion hergestellt, welche 56,5 % Wasser, 27,7 % eines aminofunktionellen $\alpha$, $\omega$-Dihydroxypolydimethylsiloxans, 10,8 % eines Polyalkylwasserstoffsiloxans und 5 % eines Gemischs aus niedrigmolekularem Diol, ethoxiliertem Fettalkohol und Salzsäure enthielt. Diese 5 % waren aus den gleichen Komponenten zusammengesetzt, die in Beispiel 1 zur Herstellung der wäßrigen Lösung verwendet wurden.

Vergleichsbeispiel 2

Es wurde eine wäßrige Dispersion hergestellt, welche die gleichen Komponenten enthielt wie die Dispersion von Vergleichsbeispiel 1, aber in geänderten Mengenverhältnissen, nämlich 49,8 % Wasser, 15,9 % aminofunktionelles Polydimethylsiloxan, 28,3 % Polyalkylwasserstoffsiloxan und 6 % an den übrigen Bestandteilen.

Die Mengen wurden so gewählt, daß die Dispersion von Vergleichsbeispiel 1 den gleichen Stickstoffgehalt aufwies wie die Dispersion des erfindungsgemäßen Beispiels. In Vergleichsbeispiel 2 lag die gleiche Menge an Wasserstoffsiloxan vor wie sie im erfindungsgemäßen Beispiel vor der Umsetzung der Komponenten A, B und C eingesetzt wurde. Die Dispersionen von Vergleichsbeispiel 1 und 2 enthielten somit ein aminofunktionelles Polysiloxan und ein Polyalkylwasserstoffsiloxan nebeneinander, ohne daß zwischen diesen beiden Inhaltsstoffen vorher eine chemische Reaktion (Vorvernetzung) stattgefunden hatte.

Die Dispersionen gemäß erfindungsgemäßem Beispiel sowie Vergleichsbeispiel 1 und 2 wurden nunmehr miteinander verglichen.

Die Dispersion gemäß erfindungsgemäßem Beispiel ergab angenehm weichen Griff eines damit behandelten Fasermaterials bei ausgezeichneter Permanenz gegenüber Waschvorgängen. Diese Dispersion ließ sich nach einer Vortrocknung bei Lagerung in Filme umwandeln. Sie ist insbesondere sehr gut geeignet für die Behandlung von Vliesstoffen und kann auf diesen, wenn gewünscht, einer weiteren Vernetzung unterworfen werden. Hierdurch läßt sich die Permanenz der Effekte weiter erhöhen.
Die beiden Dispersionen gemäß Vergleichsbeispielen 1 und 2 ergaben zwar auch angenehm weichen Griff von damit behandelten Fasermaterialien. Jedoch ist zum einen die Permanenz der Effekte weniger gut als im Fall des erfindungsgemäßen Beispiels. Ferner waren sie der Dispersion der erfindungsgemäßen Beispiels unterlegen, was die erzielbaren Effekte bei der Behandlung von Faservliesen betraf.

**Patentansprüche**

1. Polyorganosiloxangemisch, erhältlich durch Umsetzung eines linearen Polyorganosiloxans A) mit 5 bis 70, vorzugsweise 10 bis 60 Siliciumatomen, das Einheiten der allgemeinen Formel (I)

$$\begin{array}{c} R^1 \\ | \\ \text{-Si-O-} \\ | \\ H \end{array} \qquad (I)$$

und gegebenenfalls Einheiten der allgemeinen Formel (II) aufweist,

$$\begin{array}{c} R^1 \\ | \\ \text{-Si-O-} \\ | \\ R^1 \end{array} \qquad (II)$$

und dessen Endgruppen durch Reste $(R^1)_3$Si-O- oder durch Reste $H(R^1)_2$Si-O- gebildet werden, mit einem linearen α,ω-Dihydroxypolydiorganosiloxan B) mit 10 bis 150, vorzugsweise 20 bis 80 Siliciumatomen, das Einheiten der oben genannten allgemeinen Formel (II) und gegebenenfalls zusätzlich Einheiten der Formel (IV) aufweist

$$\begin{array}{c} R^1 \\ | \\ \text{-Si-O-} \\ | \\ Y \end{array} \qquad \text{(IV)}$$

und dessen Endgruppen durch Reste HO $Si(R^1)_2$-O- gebildet werden und mit einem Silan C) der allgemeinen Formel (III),

$$\begin{array}{c} \qquad Y \\ \qquad | \\ R^1_{3-x}\text{ - Si-}(OR^2)_x \end{array} \qquad \text{(III)}$$

und gegebenenfalls mit einem linearen Polyorganosiloxan D, das entweder Einheiten der Formel (I) oder der modifizierten Formel (I), in der das Wasserstoffatom durch OH ersetzt ist, und zusätzlich Einheiten der Formel (IX)

$$\begin{array}{l} R^1 \\ | \\ \text{-Si-O-} \\ | \\ CH_2\text{-}CH(R''')\text{-}(CH_2)_k\text{-}O\text{-}(CH_2CH_2\text{-}O)_m\text{-}(CHR'\text{-}CHR''\text{-}O)_n\text{-}R''' \end{array} \qquad \text{(IX)}$$

und gegebenenfalls Einheiten der Formel (II) enthält, wobei die Endgruppen des Polyorganosiloxans (D) durch Reste $(R^1)_3$ Si-O- oder durch Reste $HO(R^1)_2$Si-O- gebildet werden, wobei alle Reste $R^1$ unabhängig voneinander für einen Alkylrest mit 1-6 C-Atomen oder einen Phenylrest, vorzugsweise für einen Methylrest stehen, alle Reste $R^2$ unabhängig voneinander für einen Alkylrest mit 1-6 C-Atomen, vorzugsweise für einen Methyl- oder Ethylrest stehen, der Rest Y für einen Rest der Formel V, VI, VII oder VIII

$$-CH_2\text{-}CH(R''')\text{—}(CH_2)_k\text{-}NH\text{-}[(CH_2)_t\text{-}NH]_r\text{-}R^5 \qquad \text{(V)}$$

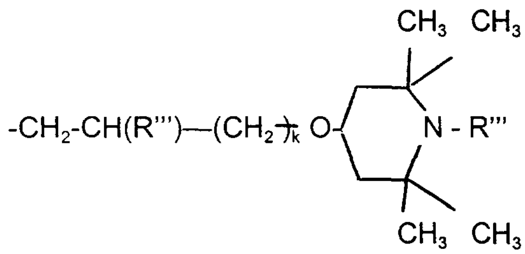

(VI)

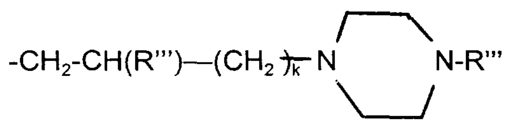

(VII)

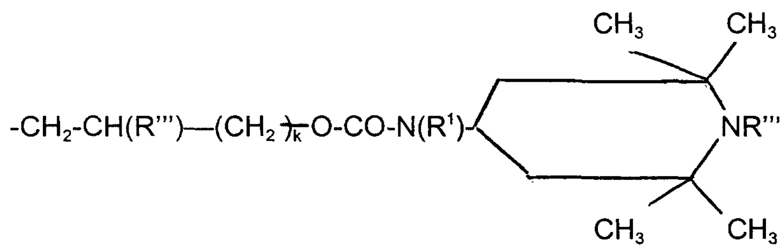

(VIII)

steht,
worin R''' für H oder $CH_3$ steht,

einer der Reste R' und R'' Wasserstoff und der andere $CH_3$ bedeutet,
m eine Zahl von 5 bis 40,
k eine Zahl von 0 bis 6, vorzugsweise 1,
t eine Zahl von 2 bis 8, vorzugsweise 2 bis 4,

und

n eine Zahl von 0 bis 10,
l eine Zahl von 0 bis 3, vorzugsweise 0 oder 1,

bedeutet und
$R^5$ für H, $-CO-CH_3$, $-CO-(CH_2)_x-OH$, $-CH_2-(CH_2)_x-CH_3$ oder den Cyclohexylrest steht, und wobei x eine Zahl von 1 bis 3, vorzugsweise 1 oder 2 ist,
wobei die Umsetzung ohne Polyorganosiloxan, das Einheiten der allgemeinen Formel $R^4SiO_{1,5}$ enthält, in der $R^4$ für einen einwertigen organischen Rest steht, als Ausgangsstoff durchgeführt wird und wobei die Umsetzung so durchgeführt wird, daß die Anzahl der im erhaltenen Polysiloxangemisch vorliegenden Si-H-Einheiten 60 bis 95 % der Anzahl Si-H-Einheiten beträgt, die vor der Umsetzung in Form der Komponenten A) und D) anwesend waren und wobei die Umsetzung ohne Verwendung eines metallhaltigen Vernetzungs- oder Kondensationskatalysators durchgeführt wird.

**2.** Polyorganosiloxangemisch nach Anspruch 1, **dadurch gekennzeichnet, daß** bei der Umsetzung zusätzlich Wasser eingesetzt wird.

**3.** Polyorganosiloxangemisch nach Anspruch 1 oder 2, **dadurch gekennzeichnet, daß** bei der Umsetzung die Zugabe einer der Komponenten A) oder C) zum Reaktionsgemisch erst nach der Zugabe der Komponente B) erfolgt.

**4.** Polyorganosiloxangemisch nach einem oder mehreren der Ansprüche 1 bis 3, **dadurch gekennzeichnet, daß** die Umsetzung mit 20 bis 60 Gewichtsteilen A), 40 bis 75 Gewichtsteilen B) und 0,01 bis 5 Gewichtsteilen C) durchgeführt wird.

**5.** Polyorganosiloxangemisch nach einem oder mehreren der Ansprüche 1 bis 4, **dadurch gekennzeichnet, daß** es eine Viskosität von weniger als 1000, vorzugsweise höchstens 500, mPas bei 20°C hat.

**6.** Polyorganosiloxangemisch nach Anspruch 4, **dadurch gekennzeichnet, daß** die Umsetzung mit zusätzlich 0,01 bis 7 Gewichtsteilen, vorzugsweise 0,1 bis 5 Gewichtsteilen Wasser und/oder mit 10 bis 30 Gewichtsteilen Polyorganosiloxan D) durchgeführt wird.

**7.** Polyorganosiloxangemisch nach einem oder mehreren der Ansprüche 1 bis 6, **dadurch gekennzeichnet, daß** die Umsetzung bei einer Temperatur von 10 bis 130°C, vorzugsweise von 10 bis 90 °C, besonders bevorzugt von 20 bis 40°C durchgeführt wird.

**8.** Polyorganosiloxangemisch nach einem oder mehreren der Ansprüche 1 bis 7, **dadurch gekennzeichnet, daß** die Umsetzung innerhalb einer Zeit von 30 Minuten bis zu 24 Stunden, vorzugsweise 30 Minuten bis zu 8 Stunden durchgeführt wird.

**9.** Zusammensetzung, dadurch erhältlich, daß ein Polyorganosiloxangemisch nach einem oder mehreren der Ansprüche 1 bis 8, gegebenenfalls unter Zugabe eines Dispergators, in Wasser dispergiert und gegebenenfalls der pH-Wert der Dispersion auf einen Wert von 2 bis 4 eingestellt wird.

**10.** Verfahren zur Herstellung eines Polyorganosiloxangemischs, **dadurch gekennzeichnet, daß** man ein lineares Polyorganosiloxan A) mit 5 bis 70, vorzugsweise 10 bis 60 Siliciumatomen, das Einheiten der allgemeinen Formel (I)

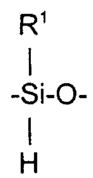

(I)

und gegebenenfalls Einheiten der allgemeinen Formel (II) aufweist,

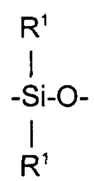

(II)

und dessen Endgruppen durch Reste $(R^1)_3$Si-O- oder durch Reste $H(R^1)_2$ Si-O- gebildet werden,
mit einem linearen α,ω-Dihydroxypolydiorganosiloxan B) mit 10 bis 150, vorzugsweise 20 bis 80 Siliciumatomen, das Einheiten der oben genannten allgemeinen Formel (II) und gegebenenfalls zusätzlich Einheiten der Formel (IV) aufweist

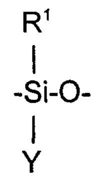

(IV)

und dessen Endgruppen durch Reste HO $Si(R^1)_2$-O- gebildet werden und mit einem Silan C) der allgemeinen Formel (III),

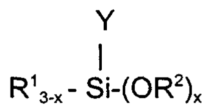

(III)

und gegebenenfalls mit einem linearen Polyorganosiloxan D, das entweder Einheiten der Formel (I) oder der modifizierten Formel (I), in der das Wasserstoffatom durch OH ersetzt ist und zusätzlich Einheiten der Formel (IX)

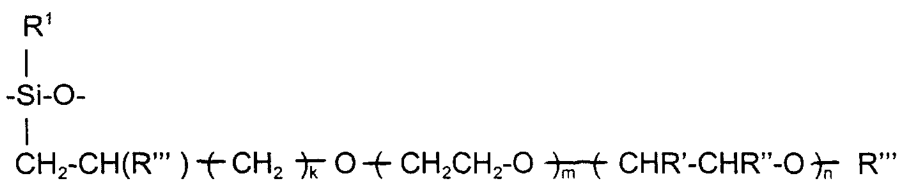

(IX)

und gegebenenfalls Einheiten der Formel (II) enthält, wobei die Endgruppen des Polyorganosiloxans (D) durch Reste $(R^1)_3Si$-O- oder durch Reste $HO(R^1)_2Si$-O- gebildet werden,

umsetzt,
wobei alle Reste $R^1$ unabhängig voneinander für einen Alkylrest mit 1-6 C-Atomen oder einen Phenylrest, vorzugsweise für einen Methylrest stehen, alle Reste $R^2$ unabhängig voneinander für einen Alkylrest mit 1-6 C-Atomen, vorzugsweise für einen Methyl- oder Ethylrest stehen, der Rest Y für einen Rest der Formel V, VI, VII oder VIII

$$-CH_2-CH(R''')-(CH_2)_k-NH-[(CH_2)_l-NH]_j-R^5 \qquad (V)$$

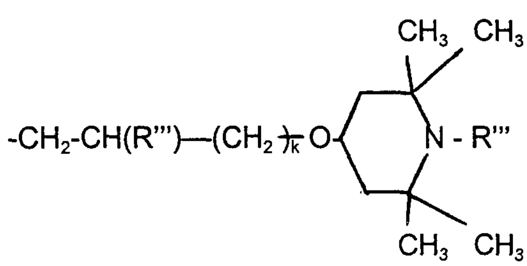

(VI)

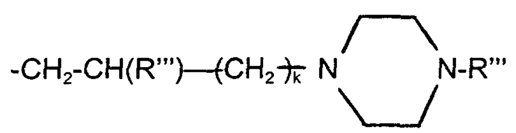

(VII)

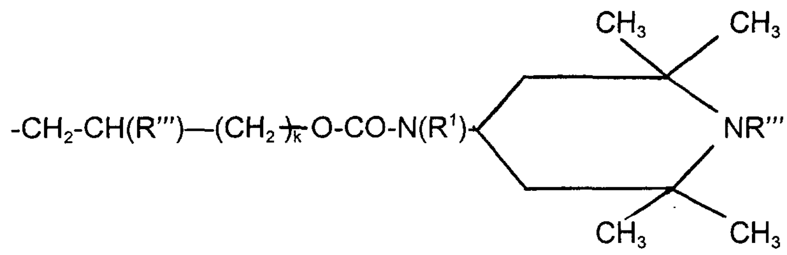

(VIII)

steht,

worin R''' für H oder $CH_3$ steht,
einer der Reste R' und R'' Wasserstoff und der andere $CH_3$ bedeutet,
m eine Zahl von 5 bis 40,
k eine Zahl von 0 bis 6, vorzugsweise 1,
t eine Zahl von 2 bis 8, vorzugsweise 2 bis 4,

und

n eine Zahl von 0 bis 10,
l eine Zahl von 0 bis 3, vorzugsweise 0 oder 1,

bedeutet und
$R^5$ für H, $-CO-CH_3$, $-CO-(CH_2)_x-OH$, $-CH_2-(CH_2)_x-CH_3$ oder den Cyclohexylrest steht, und wobei x eine Zahl von 1 bis 3, vorzugsweise 1 oder 2 ist,
wobei die Umsetzung ohne Polyorganosiloxan, das Einheiten der allgemeinen Formel $R^4SiO_{1,5}$ enthält, in der $R^4$ für einen einwertigen organischen Rest steht, als Ausgangsstoff durchgeführt wird und wobei die Umsetzung so durchgeführt wird, daß die Anzahl der im erhaltenen Polysiloxangemisch vorliegenden Si-H-Einheiten 60 bis 95 % der Anzahl Si-H-Einheiten beträgt, die vor der Umsetzung in Form der Komponenten A) und D) anwesend waren, und wobei die Umsetzung ohne Verwendung eines metallhaltigen Vernetzungs- oder Kondensationskatalysators durchgeführt wird.

**11.** Verfahren nach Anspruch 10, **dadurch gekennzeichnet, daß** bei der Umsetzung zusätzlich Wasser eingesetzt wird und die Umsetzung vorzugsweise fortgeführt wird, bis mindestens 95% der eingesetzten Wassermenge reagiert hat.

**12.** Verfahren nach Anspruch 10 oder 11, **dadurch gekennzeichnet, daß** die Zugabe einer der Komponenten A) oder C) zum Reaktionsgemisch erst nach der Zugabe der Komponente B) erfolgt.

**13.** Verfahren nach einem oder mehreren der Ansprüche 10 bis 12, **dadurch gekennzeichnet, daß** die Umsetzung bei einer Temperatur von 10 bis 130°C, vorzugsweise von 10 bis 90 °C, besonders bevorzugt von 20 bis 40°C durchgeführt wird.

**14.** Verfahren nach einem oder mehreren der Ansprüche 10 bis 13, **dadurch gekennzeichnet, daß** man 20 bis 60 Gewichtsteile eines linearen Polyorganosiloxans A) mit 40 bis 75 Gewichtsteilen eines $\alpha,\omega$-Dihydroxypolydiorganosiloxans B) und mit 0,01 bis 5 Gewichtsteilen eines Silans C) und gegebenenfalls mit 0,01 bis 7 Gewichtsteilen Wasser und gegebenenfalls mit 10 bis 30 Gewichtsteilen eines Polyorganosiloxans D) umsetzt.

**15.** Verfahren zur Herstellung einer Zusammensetzung, welche ein Polysiloxangemisch enthält, **dadurch gekennzeichnet, daß** man zuerst ein Verfahren nach einem oder mehreren der Ansprüche 10 bis 14 durchführt und anschließend das erhaltene Polyorganosiloxangemisch in Wasser dispergiert, gegebenenfalls unter Verwendung eines Dispergators oder Dispergatorgemischs, und daß man den pH-Wert dieser Dispersion auf einen Wert von 2 bis 4 einstellt.

**16.** Verwendung eines Polyorganosiloxangemischs nach einem oder mehreren der Ansprüche 1 bis 8 oder einer Zusammensetzung nach Anspruch 9 zur Behandlung von Fasermaterialien, bevorzugt von textilen Flächengebilden, insbesondere von Vliesstoffen.

Europäisches Patentamt

# EUROPÄISCHER RECHERCHENBERICHT

Nummer der Anmeldung
EP 00 10 8509

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A,D | EP 0 767 217 A (DOW CORNING GMBH)<br>9. April 1997 (1997-04-09)<br>* Anspruch 1 * | 1-16 | C08G77/26<br>C08L83/08<br>D06M15/643 |
| A,D | EP 0 702 106 A (TAKATA CORP ;SHINETSU CHEMICAL CO (JP))<br>20. März 1996 (1996-03-20)<br>* Anspruch 1 * | 1-16 | |
| A,D | EP 0 841 366 A (OBSCHESTVENNOE OB EURO ASIAN P) 13. Mai 1998 (1998-05-13)<br>* Anspruch 1 * | 1-16 | |
| A,D | US 4 177 176 A (BURRILL PETER M ET AL)<br>4. Dezember 1979 (1979-12-04)<br>* Beispiel 1 * | 1-16 | |
| A | DE 43 30 967 A (PFERSEE CHEM FAB)<br>16. März 1995 (1995-03-16)<br>* Beispiel 4B * | 1-16 | |
| | | | RECHERCHIERTE SACHGEBIETE (Int.Cl.7) |
| | | | C08G<br>C08L<br>D06M |

Der vorliegende Recherchenbericht wurde für alle Patentansprüche erstellt

| Recherchenort | Abschlußdatum der Recherche | Prüfer |
|---|---|---|
| MÜNCHEN | 21. September 2000 | Hoffmann, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 00 10 8509

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-09-2000

| Im Recherchenbericht angeführtes Patentdokument | Datum der Veröffentlichung | Mitglied(er) der Patentfamilie | Datum der Veröffentlichung |
|---|---|---|---|
| EP 0767217 A | 09-04-1997 | CA 2186995 A | 05-04-1997 |
| | | DE 69601402 D | 04-03-1999 |
| | | DE 69601402 T | 24-06-1999 |
| | | JP 9110992 A | 28-04-1997 |
| | | US 5905131 A | 18-05-1999 |
| EP 0702106 A | 20-03-1996 | JP 8085405 A | 02-04-1996 |
| | | US 5705445 A | 06-01-1998 |
| EP 0841366 A | 13-05-1998 | RU 2111982 C | 27-05-1998 |
| | | JP 11509885 T | 31-08-1999 |
| | | US 5886060 A | 23-03-1999 |
| | | CA 2227232 A | 27-11-1997 |
| | | WO 9744380 A | 27-11-1997 |
| US 4177176 A | 04-12-1979 | GB 1543157 A | 28-03-1979 |
| | | AU 499682 B | 26-04-1979 |
| | | AU 1370676 A | 10-11-1977 |
| | | CA 1087334 A | 07-10-1980 |
| | | DE 2621460 A | 25-11-1976 |
| | | FR 2311818 A | 17-12-1976 |
| | | IT 1071497 B | 10-04-1985 |
| | | JP 945057 C | 20-03-1979 |
| | | JP 51149354 A | 22-12-1976 |
| | | JP 53028468 B | 15-08-1978 |
| DE 4330967 A | 16-03-1995 | EP 0643090 A | 15-03-1995 |
| | | JP 7166064 A | 27-06-1995 |
| | | US 5562761 A | 08-10-1996 |

EPO FORM P0461

Für nähere Einzelheiten zu diesem Anhang : siehe Amtsblatt des Europäischen Patentamts, Nr.12/82